# FASCICULE DE BREVET EUROPEEN

(11) **EP 1 100 995 B1**
(45) Date de publication et mention de la délivrance du brevet: **10.12.2003**
(21) Numéro de dépôt: 00936940.6
(22) Date de dépôt: 26.05.2000
(51) Int. Cl.: E01D 19/04, B65G 7/02, F16C 29/00

(54) **DISPOSITIF POUR SOUTENIR UNE CHARGE MOBILE**
STÜTZVORRICHTUNG FÜR EINE BEWEGLICHE LAST
DEVICE FOR SUPPORTING A MOVING LOAD

(30) Priorité: 01.06.1999 FR 9906867
(43) Date de publication de la demande: 23.05.2001
(73) Titulaire: FREYSSINET INTERNATIONAL STUP, 78140 Vélizy Cedex (FR)
(72) Inventeur: DE LA FUENTE, Carlos, F-92000 Nanterre (FR)
(74) Mandataire: Loisel, Bertrand
(86) Numéro de dépôt international: FR0001434
(87) Numéro de publication internationale: WO00073589

(56) Documents cités:
- DE-A- 2 811 200
- DE-A- 19 749 190
- DE-B- 2 124 480
- FR-A- 2 322 239
- FR-A- 2 437 466

## Description

L'invention est relative aux dispositifs destinés à être interposés entre une base et une lourde charge en vue de supporter cette charge de façon telle qu'elle puisse être déplacée horizontalement par rapport à la base.

Elle trouve une application particulière. mais non exclusive, dans la technique des ponts poussés.

Dans cette technique. le tablier de l'ouvrage est construit sur le remblai adjacent à son site par des ateliers de travail fixes. ce qui facilite largement l'organisation du chantier. Le tablier est construit section par section. Une fois qu'une section a été construite, elle est poussée par des actionneurs appropriés le long du trajet du pont, de façon à permettre la construction du tronçon suivant. Les sections du tablier glissent sur les piles déjà réalisées de l'ouvrage.

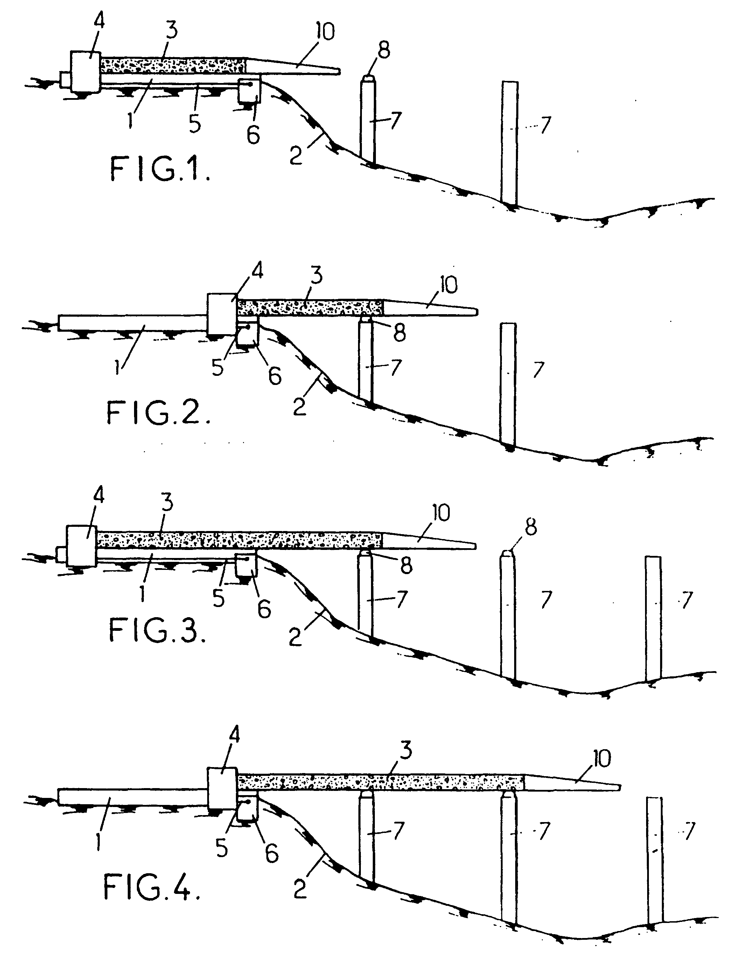

Le principe de cette technique des ponts poussés est illustré par les schémas des figures 1 à 6.

Les figures 1 à 4 montrent une plate-forme 1 installée au bord d'une brèche 2 qui sera enjambée par le pont. Le tablier 3 du pont est construit section par section sur cette plate-forme 1. Un organe de poussée approprié 4 est situé à l'arrière de la plate-forme 1 pendant la réalisation de chaque section du tablier 3 (figures 1 et 3). Une fois cette section terminée, l'organe 4 la pousse vers la brèche afin de faire progresser le tablier du pont et de libérer l'espace de construction sur la plate-forme 1 (figures 2 et 4), le tablier prenant appui sur les piles 7 du pont préalablement réalisées. Dans l'exemple schématisé sur les figures 1 à 4, l'organe 4 prend appui à l'arrière de la section de tablier construite, et exerce au moyen d'un moteur hydraulique une traction sur des éléments tels que des câbles 5 ancrés dans une fondation appropriée 6 située à l'extrémité de la plate-forme 1 adjacente à la brèche 2, l'organe 4 se déplaçant alors vers la brèche pour faire avancer le tablier.

Dans son application aux ponts poussés, la présente invention se rapporte plus particulièrement aux systèmes employés pour faire glisser le tablier 3 du pont au sommet des piles 7 lors des opérations de poussée.

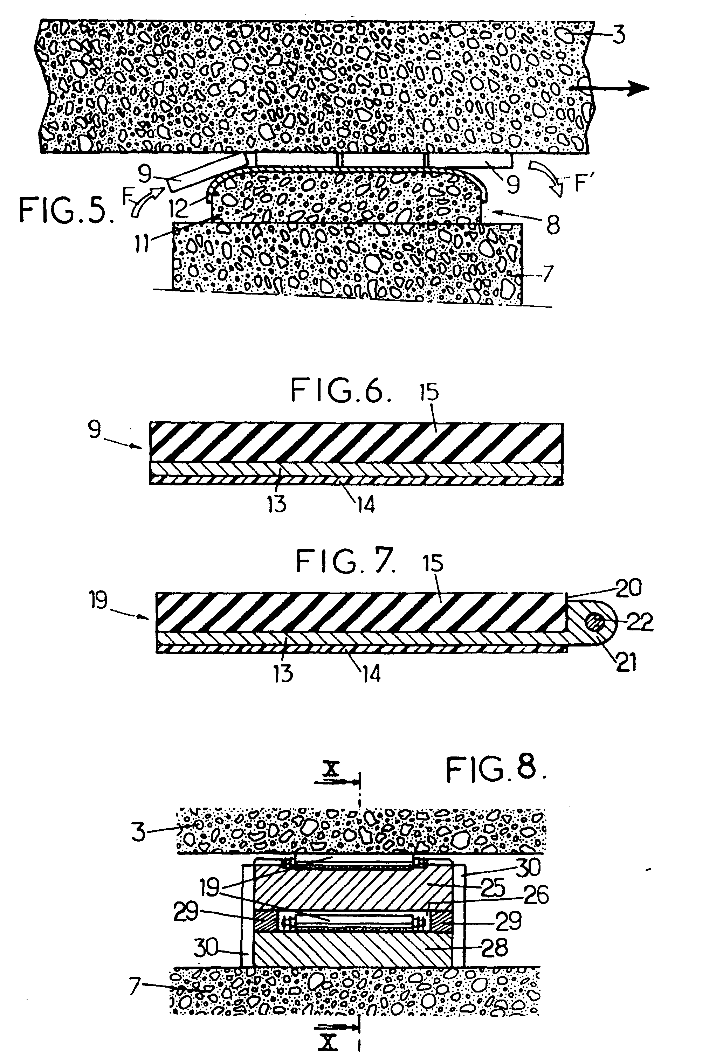

Classiquement, on utilise pour cela des selles de glissement 8 qui se fixent en haut des piles 7 (figures 1 à 5), et qui coopèrent avec des patins de glissement 9 engagés sous le tablier 3 au fur et à mesure de son avancement. Ces patins 9 ne sont pas représentés sur les figures 1 à 4, mais ils sont visibles sur la figure 5. En général. on prévoit au moins deux selles de glissement 8 sur la largeur de chaque pile 7 afin que l'appui du tablier 3 soit stable. Comme le montrent les figures 1 à 4, un avant-bec 10 est fixé en porte-à-faux à l'avant de la première section du tablier 3. Cet avant-bec prend appui sur les piles pour empêcher que le tablier bascule dans la brèche lors des premières opérations de poussée. Il limite en outre la masse en porte-à-faux entre deux piles dans la partie courante de l'ouvrage.

La selle 8 comporte un bloc d'appui 11 dont la face supérieure est revêtue d'une plaque métallique 12 en acier inoxydable poli (figure 5). Chaque patin de glissement 9 (figure 6) est réalisé à partir d'une matière déformable. telle que du « Néoprène », renforcée par une ou plusieurs frettes métalliques 13. La face inférieure du patin comporte un revêtement 14 présentant un faible coefficient de frottement avec le métal de la plaque 12. Le matériau du revêtement 14 est par exemple du polytétrafluoroéthylène (PTFE). Dans l'exemple représenté sur la figure 6, le patin 9 consiste simplement en une frette d'acier 13 prise en sandwich entre le revêtement en PTFE 14 et la matière déformable 15 du côté de la face supérieure du patin. La matière déformable 15 vient en contact avec la face inférieure du tablier 3, dont elle épouse les éventuelles irrégularités, tandis que la face revêtue de PTFE 14 glisse sur la selle 8.

Des opérateurs engagent manuellement les patins 9 sous le tablier 3 (flèche F sur la figure 5) lorsque celui-ci est poussé par l'organe 4. Le patin est alors entraîné par le tablier en déplacement. Une fois qu'il a dépassé la selle 8. il tombe de l'autre côté de la pile 7 (flèche F'). La présence d'opérateurs, qui peuvent être assez nombreux surtout dans les ouvrages très longs, pour engager les patins sous le tablier en haut des piles pose plusieurs problèmes : ces opérateurs peuvent commettre des erreurs ou omissions éventuellement désastreuses telles que l'introduction de patins à l'envers (voir FR-A-2 758 835) ; des accidents peuvent survenir ; et le coût de main-d'oeuvre s'en trouve augmenté.

La demande de brevet FR-A-2 597 520 décrit un dispositif destiné à remplacer le système des selles et des patins de façon à permettre de se dispenser des opérateurs. Ce dispositif comporte un noyau rigide en forme de cylindre aplati, et une bande continue en élastomère armé disposée autour du noyau. La bande glisse sur le noyau lorsqu'elle reçoit la charge du tablier en train d'avancer. En pratique, ce dispositif fonctionne mal pour des charges très lourdes.

Pour de très grands ouvrages, dans lesquels le tablier devait être déplacé suivant une pente significative. il a été développé des mécanismes sophistiqués, de structure relativement complexe. comprenant des vérins auxiliaires de soulèvement en haut des piles, permettant d'effectuer la poussée horizontalement par pas successifs. De tels mécanismes sont trop complexes et coûteux pour la plupart des applications.

Les demandes de brevet DE-A-28 11 200 et FR-A-2 437 466 décrivent des selles de glissement équipées de patins assemblés pour former une bande continue disposée autour d'une plaque. La bande a une trajectoire fermée autour de la plaque, le long de laquelle les patins gardent leur face de glissement dirigée vers la plaque. Les patins sont relativement petits et nombreux pour pouvoir suivre la courbure de leur trajectoire aux extrémités de la plaque. Ces dispositifs ont l'inconvénient de requérir qu'une hauteur importante soit dégagée entre le sommet de la pile et la face inférieure du tablier

La présente invention a pour but de proposer un dispositif efficace et relativement simple pour assurer de manière automatique la fonction de coulissement d'une charge lourde (par exemple un tablier de pont poussé) par rapport à une base (par exemple une pile du pont).

L'invention propose ainsi un dispositif pour soutenir une charge mobile, comprenant une plaque de support et des patins, dans lequel la plaque de support et chaque patin ont des faces de glissement respectives pour le glissement des patins sur la plaque de support, le dispositif comprenant en outre des moyens d'espacement pour définir un intervalle le long de la plaque de support à l'opposé de sa face de glissement, et des moyens d'entraînement des patins suivant une trajectoire fermée autour de la plaque de support, la trajectoire fermée comportant un trajet aller dans lequel les patins glissent sur la plaque de support, caractérisé en ce que la trajectoire fermée comporte un trajet retour dans lequel les patins passent dans ledit intervalle avec leur face de glissement orientée à l'opposé de la plaque de support.

On conserve ainsi un principe de glissement fiable, avec des patins. Le déplacement des patins sur leur trajectoire a lieu automatiquement, sans requérir la présence d'opérateurs.

Un tel dispositif est applicable pour le poussage du tablier d'un pont, la face de glissement de la plaque de support étant dirigée vers le haut. Il peut également servir à déplacer des charges lourdes sur le sol ou une autre base fixe. la face de glissement de la plaque de support pouvant alors être dirigée soit vers le haut (la plaque de support est posée au sol et les patins sont entraînés par la charge) soit vers le bas (la plaque de support est fixée à la charge et les patins prennent appui sur le sol).

Dans des modes de réalisation préférés du dispositif selon l'invention :
- les moyens d'entraînement comprennent au moins un organe d'entraînement en boucle fermée disposé latéralement par rapport aux patins et des moyens de guidage de l'organe d'entraînement pour définir la trajectoire fermée. chaque patin étant articulé sur l'organe d'entraînement selon un axe perpendiculaire à la trajectoire fermée et adjacent à un bord du patin dirigé vers une extrémité de la trajectoire fermée espacée de la plaque de support d'une distance au moins égale à la longueur du patin. extrémité à laquelle les moyens de guidage sont montés de façon à laisser le patin suivre la trajectoire fermée sans se retourner ;
- les moyens d'entraînement comprennent deux organes d'entraînement en boucle fermée. disposés en parallèle de part et d'autre des patins, et les moyens de guidage comprennent. à ladite extrémité de la trajectoire fermée, une paire de roues pivotantes recevant respectivement les deux organes d'entraînement, l'espace situé entre les deux roues de la paire étant libre pour le passage des patins :
   - au moins un levier oscille dans l'espace situé entre la plaque de support et ladite extrémité de la trajectoire fermée de manière à soutenir les patins lorsqu'ils suivent la trajectoire à ladite extrémité :
      - l'oscillation du levier selon l'alinéa précédent est réglée pour soulever les patins au voisinage de ladite extrémité de la trajectoire fermée lors d'une inversion du sens de déplacement de la charge, afin de leur faire suivre la trajectoire fermée en sens inverse ;
      - l'oscillation du levier selon l'un des deux alinéas précédents est commandée par un mécanisme à came entraîné par les moyens de guidage ;
      - chaque organe d'entraînement en boucle fermée est une chaîne engrenant sur des roues dentées comprises dans les moyens de guidage ;
      - chaque patin présente au moins une armature métallique à laquelle sont reliés des moyens d'articulation sur les moyens d'entraînement.

D'autres particularités et avantages de la présente invention apparaîtront dans la description ci-après d'exemples de réalisation non limitatifs, en référence aux dessins annexés. dans lesquels :
- les figures 1 à 4, précédemment commentées, sont des schémas de principe illustrant la technique des ponts poussés :
- la figure 5 est une vue schématique d'un système de glissement classique employé au sommet d'une pile de pont en construction ;
- la figure 6 est une vue en coupe d'un patin de glissement de constitution classique ;
- la figure 7 est une vue en coupe d'un patin de glissement adapté à un dispositif selon l'invention ;
- la figure 8 est une vue en coupe transversale d'un dispositif selon l'invention, selon le plan VIII-VIII indiqué sur les figures 9 et 10 :
   - la figure 9 est une vue de dessus du dispositif de la figure 8 ; et
   - les figures 10 et 11 sont des vues en coupe longitudinale du dispositif, selon le plan X-X indiqué sur les figures 8 et 9, illustrant deux positions différentes des patins le long de leur trajectoire.

La figure 7 montre un patin de glissement 19 dont la structure générale est analogue à celle précédemment décrite. Le patin a notamment une face de glissement 14 couverte d'un matériau à faible coefficient de glissement tel que le PTFE. Sur un bord 20 du patin, une frette 13 de renforcement a un prolongement 21 adapté à recevoir un axe 22 procurant une articulation du patin autour d'une direction parallèle au bord 20.

Dans le dispositif représenté sur les figures 8 à 11, l'axe 22 a ses deux extrémités reliées à des maillons de deux chaînes parallèles 24 disposées latéralement de part et d'autre des patins 19. Les deux chaînes 24 entraînent les patins 19 suivant une trajectoire en boucle fermée. Aux deux extrémités de cette trajectoire, les chaînes 24 sont guidées par des roues dentées 32,33 qui délimitent d'une part un trajet aller des patins, s'étendant au-dessus d'une plaque de support 25. et d'autre part un trajet retour dans lequel les patins passent dans un intervalle 26 ménagé au-dessous de la plaque de support 25.

La plaque de support 25 est par exemple réalisée en acier. Sa face supérieure, recouverte par une tôle d'acier inoxydable poli 27, forme une face de glissement complémentaire de la face inférieure des patins comportant le revêtement en PTFE 14.

Dans l'exemple représenté. la plaque de support 25 est disposée au-dessus d'une plaque de base 28. également en acier, fixée au sommet de la pile 7. Pour ménager l'intervalle 26 entre les plaques 25 et 28, des longerons d'espacement en acier 29 sont disposés entre ces deux plaques. de part et d'autre des patins 19 et des chaînes 24 (figure 8). La plaque de support 25 et les longerons 29 doivent avoir une robustesse suffisante pour soutenir la charge du tablier 3. Dans une réalisation typique, la plaque de support 25 aura une épaisseur de l'ordre de 10 centimètres. et les longerons 29 une hauteur de quelques centimètres, juste suffisante pour permettre le passage des patins 19 dans leur trajet de retour.

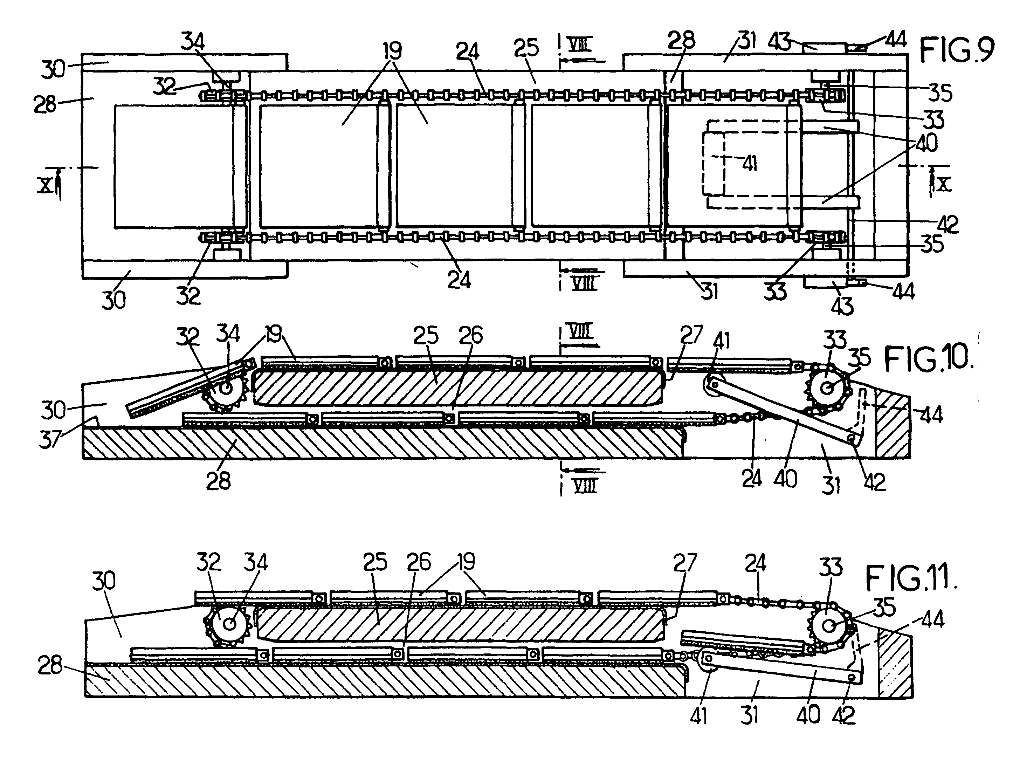

A chaque extrémité de la trajectoire en boucle fermée des patins, deux supports latéraux 30, 31 sont disposés de part et d'autre des plaques 25, 28. Ces supports 30, 31 portent les axes de rotation 34.35 des roues dentées 32. 33 sur lesquelles engrènent les chaînes 24. A l'extrémité arrière de la trajectoire fermée (partie gauche des figures 9 à 11), l'axe 34 des roues dentées 32 peut s'étendre en travers du dispositif. d'un support latéral 30 à l'autre. En revanche, sur le côté avant du dispositif, les axes de rotation 35 des roues dentées 33, respectivement portés par les supports latéraux 31, ne s'étendent pas dans l'intervalle entre les deux roues dentées 33.

Le bord 20 de chaque patin 19, le long duquel il est articulé par rapport à la chaîne 24, est dirigé vers l'extrémité avant du dispositif, et le tablier 3 progresse en principe de l'extrémité arrière vers l'extrémité avant.

Comme le montrent les figures 9 à 11, la distance entre le bord avant de la plaque de support 25 et l'extrémité avant de la trajectoire fermée est plus grande que la longueur d'un patin le long de sa trajectoire. Lorsque le patin arrive au bout de son trajet aller et dépasse entièrement la plaque de support 25 (position représentée sur la figure 10), il descend vers la plaque de base 28, et l'absence d'axe dans l'intervalle entre les deux roues dentées 33 lui permet d'effectuer cette descente sans se retourner. En conséquence, la face inférieure 14 du patin, garnie de PTFE, se retrouvera sur la face supérieure de la plaque de base 28. Pour éviter d'user le revêtement en PTFE, on peut munir la face supérieure de cette plaque 28 d'une autre tôle en acier inoxydable poli 37.

Les patins sont entraînés le long de leur trajet retour par les chaînes 24 mises en mouvement par les patins situés sur le trajet aller et qui sont poussés par le tablier 3. A l'extrémité arrière du dispositif, la présence de l'axe 34 entre les roues dentées 32 n'empêche pas le patin de remonter sans se retourner, son axe d'articulation 22 suivant le pourtour des roues dentées 32.

Pour garantir un bon entraînement des patins, on prévoit de préférence des moyens non représentés de mise en tension des chaînes 24, tels que des ressorts tendant à écarter les axes 35 de l'axe 34.

Pour assurer une descente en douceur des patins à l'extrémité avant du dispositif, on prévoit avantageusement un ou plusieurs leviers 40 oscillant dans l'espace situé entre la plaque de support 25 et l'extrémité avant de la trajectoire fermée des patins. Dans l'exemple représenté. le dispositif comporte deux leviers parallèles 40, dont les extrémités arrière supportent un rouleau 41 destiné à venir en contact avec la face inférieure des patins garnie de PTFE.

Les leviers 40 sont fixés à un axe 42 parallèle aux axes de rotation 35 des roues dentées. L'axe 42 est associé à un mécanisme à came pour commander l'oscillation des leviers 40. A titre d'exemple. on peut relier les axes d'articulation 35 des roues dentées 33 à des cames respectives 43 situées à l'extérieur des supports latéraux 31 (figure 9). Ces cames 43 actionnent des bras 44, fixés à l'axe de rotation 42 dans sa partie dépassant des supports latéraux. 31, et s'étendant transversalement aux leviers 40. Sous le poids des leviers 40 et du rouleau 41, l'ensemble mobile 40-42, 44 tend à basculer vers la position où le rouleau 41 affleure la surface supérieure de la plaque de base 28. Mais dans certaines phases du mouvement, les cames 43 actionnent les bras 44 pour amener le rouleau 41 dans la position illustrée sur la figure 10 où il affleure la face supérieure de la plaque de support 25.

Ainsi. entre les positions illustrées sur la figure 10 et 11, la chute du patin est ralentie et contrôlée par l'oscillation du levier 40 qui le dépose en douceur sur la plaque de base 28.

On peut observer que l'oscillation du levier 40 permet en outre d'effectuer des mouvements de recul du tablier 3 si cela s'avère nécessaire. Le mouvement des patins à l'extrémité arrière n'est pas gêné en cas de recul. Et à l'extrémité avant, les patins pourront être soulevés par le rouleau 41 de la position de la figure 11 vers celle de la figure 10. les mêmes cames 43 assurant la cinématique dans les deux sens.

Les contraintes de compression admissibles sur les patins et sur le béton sont du même ordre de grandeur que dans le cas des selles traditionnelles du type représenté sur la figure 5. ce qui permet de supporter en glissement des charges de plusieurs méganewtons, avec un dispositif d'épaisseur globale modérée. Plusieurs de ces dispositifs peuvent être agencés en série ou en parallèle pour augmenter localement la capacité portante. La plaque de base 28 peut alors être partagée entre plusieurs dispositifs. Cette plaque 28 peut en outre être munie sur sa face inférieure d'un piston du type de ceux utilisés classiquement dans les appuis à pot, afin de permettre au dispositif de s'adapter à d'éventuelles rotations du tablier sans transmettre d'efforts parasites.

On comprendra que diverses variantes peuvent être apportées au dispositif décrit ci-dessus en référence aux figures 7 à 11. Dans cette description, on a supposé que la charge lourde. constituée par le tablier d'un pont poussé, venait au contact des patins dans leur trajet aller. A l'examen du dispositif. on peut observer qu'il pourrait être disposé à l'envers par rapport à ce qui a été décrit, la charge lourde étant appliquée contre la plaque de base 28, et les patins contre une base fixe telle que le sol.

## Revendications

1. Dispositif pour soutenir une charge mobile (3). comprenant une plaque de support (25) et des patins (19), dans lequel la plaque de support et chaque patin ont des faces de glissement respectives (27, 14) pour le glissement des patins sur la plaque de support, le dispositif comprenant en outre des moyens d'espacement (29) pour définir un intervalle (26) le long de la plaque de support à l'opposé de sa face de glissement, et des moyens (24, 32, 33) d'entraînement des patins suivant une trajectoire fermée autour de la plaque de support, la trajectoire fermée comportant un trajet aller dans lequel les patins glissent sur la plaque de support **caractérisé en ce que** la trajectoire fermée comporte un trajet retour dans lequel les patins passent dans ledit intervalle avec leur face de glissement orientée à l'opposé de la plaque de support.

2. Dispositif selon la revendication 1, dans lequel les moyens d'entraînement comprennent au moins un organe d'entraînement en boucle fermée (24) disposé latéralement par rapport aux patins et des moyens (32. 33) de guidage de l'organe d'entraînement pour définir la trajectoire fermée, dans lequel chaque patin (19) est articulé sur l'organe d'entraînement selon un axe (22) perpendiculaire à la trajectoire fermée et adjacent à un bord du patin. et dans lequel ledit bord du patin (20) est dirigé vers une extrémité de la trajectoire fermée espacée de la plaque de support d'une distance au moins égale à la longueur du patin, extrémité à laquelle les moyens de guidage (33) sont montés de façon à laisser le patin suivre la trajectoire fermée sans se retourner.

3. Dispositif selon la revendication 2, dans lequel les moyens d'entraînement comprennent deux organes d'entraînement en boucle fermée (24) disposés en parallèle de part et d'autre des patins (19). et dans lequel les moyens de guidage comprennent, à ladite extrémité de la trajectoire fermée, une paire de roues pivotantes (33) recevant respectivement les deux organes d'entraînement, l'espace situé entre les deux roues de la paire étant libre pour le passage des patins.

4. Dispositif selon la revendication 2 ou 3, comprenant en outre au moins un levier (40) oscillant dans l'espace situé entre la plaque de support (25) et ladite extrémité de la trajectoire fermée de manière à soutenir les patins (19) lorsqu'ils suivent la trajectoire à ladite extrémité.

5. Dispositif selon la revendication 4, dans lequel l'oscillation du levier (40) est réglée pour soulever les patins (19) au voisinage de ladite extrémité de la trajectoire fermée lors d'une inversion du sens de déplacement de la charge (3), afin de leur faire suivre la trajectoire fermée en sens inverse.

6. Dispositif selon la revendication 4 ou 5. dans lequel l'oscillation du levier (40) est commandée par un mécanisme à came (43) entraîné par les moyens de guidage (33, 35).

7. Dispositif selon l'une quelconque des revendications 2 à 6, dans lequel chaque organe d'entraînement en boucle fermée est une chaîne (24) engrenant sur des roues dentées (32,33) comprises dans les moyens de guidage.

8. Disppsitif selon l'une quelconque des revendications précédentes, dans lequel chaque patin (19) présente au moins une armature métallique (13) à laquelle sont reliés des moyens (21) d'articulation sur les moyens d'entraînement.

## Patentansprüche

1. Stützvorrichtung für eine bewegliche Last (3), umfassend eine Tragplatte (25) und Schlitten (19), bei welcher die Tragplatte und jeder Schlitten jeweilige Gleitflächen (27, 14) für das Gleiten der Schlitten auf der Tragplatte aufweisen, wobei die Vorrichtung ferner Beabstandungsmittel (29) umfasst, um einen Zwischenraum (26) längs der Tragplatte auf der deren Gleitfläche abgewandter Seite festzulegen sowie Mittel (24, 32, 33) zum Antreiben der Schlitten gemäß einer geschlossenen Bahn um die Tragplatte herum, wobei die geschlossene Bahn einen Hinweg umfasst, in dem die Schlitten auf der Tragplatte gleiten, **dadurch gekennzeichnet, dass** die geschlossene Bahn einen Rückweg beinhaltet, in welchem die Schlitten in dem Zwischenraum verlaufen, wobei ihre Gleitflächen von der Tragplatte abgewandt orientiert sind.

2. Vorrichtung nach Anspruch 1, in der die Antriebsmittel mindestens ein als eine geschlossene Schleife ausgebildetes Antriebselement (24) umfassen, das bezüglich der Schlitten seitlich angeordnet ist, sowie Mittel (32, 33) zum Führen des Antriebselements um die geschlossene Bahn festzulegen, in welcher jeder Schlitten (19) an dem Antriebselement gemäß einer Achse (22) angelenkt ist, die zu der geschlossenen Bahn orthogonal verläuft und einem Rand des Schlittens benachbart ist, und in welcher der Rand (20)des Schlittens auf ein Ende der geschlossenen Bahn zu gerichtet ist, das von der Tragplatte um eine Distanz beabstandet ist, die wenigstens gleich der Länge des Schlittens ist, wobei die Führungsmittel (33) an diesem Ende derart angebracht sind, dass sie den Schlitten der geschlossenen Bahn folgen lassen, ohne diesen umzukehren.

3. Vorrichtung nach Anspruch 2, in welcher die Antriebsmittel zwei zu einer geschlossenen Schleife ausgebildete Antriebselemente (24) umfassen, welche beidseits der Schlitten (19) parallel angeordnet sind, und In welcher die Führungsmittel an dem Ende der geschlossenen Bahn ein Paar drehbarer Räder (33) aufweisen, welche jeweils die beiden Antriebselemente aufnehmen, wobei der Abstand zwischen den beiden Rädern des Paars für den Durchtritt der Schlitten frei ist.

4. Vorrichtung nach Anspruch 2 oder 3, außerdem umfassend wenigstens einen Hebel (40), der sich in dem Raum hin- und herbewegt, der zwischen der Tragplatte (25) und dem Ende der geschlossenen Bahn angeordnet ist, so dass die Schlitten (19) abgestützt sind, wenn sie der Bahn an dem Ende folgen.

5. Vorrichtung nach Anspruch 4, in welcher die Hin- und Herbewegung des Hebels. (40) gesteuert ist, um die Schlitten (19) in der Nähe des Endes der geschlossenen Bahn bei einer Umkehrung der Verlagerungsrichtung der Last (3) anzuheben, um sie der geschlossenen Bahn in umgekehrter Richtung folgen zu lassen.

6. Vorrichtung nach Anspruch 4 oder 5, in welcher die Hin- und Herbewegung des Hebels (40) durch einen Nockenmechanismus (43) gesteuert ist, der von den Führungsmitteln (33, 35) angetrieben ist.

7. Vorrichtung nach einem der Ansprüche 2 bis 6, in welcher jedes zu einer Schleife geschlossene Antriebselement eine Kette (24) ist, die mit Zahnrädern (32, 33) in Eingriff steht, welche Teil der Führungsmittel sind.

8. Vorrichtung nach einem der vorhergehenden Ansprüche, in welcher jeder Schlitten (19) wenigstens eine Metallarmierung (13) aufweist, mit welcher Mittel (21) zum Anlenken an den Antriebsmitteln verbunden sind.

## Claims

1. Device for supporting a moving load (3) comprising a support plate (25) and runners (19), the support plate and each runner having respective running faces (27, 14) to enable the runners to slide on the support plate, the divice further comprising spacing means (29) to define a gap (26) along the support plate opposing its running face and means (24, 32, 33) for driving the runners along a closed path around the support plate, the closed path comprising an outward path in which the runners slide on the support plate, **characterized in that** the closed path has a return path in which the runners pass through said gap with their running faces opposite the support plate.

2. Device according to claim 1, wherein the drive means comprise at least one closed-loop drive member (24) disposed laterally relative to the runners and means (32, 33) for guiding the drive member to define the closed path, wherein each runner (19) is articulatingly mounted on the drive member about an axis (22) perpendicular to the closed path and adjacent to an edge of the runner, and wherein said edge of the runner (20) is directed towards an end of the closed path spaced at a distance from the support plate at least equal to the length of the runner, at which end the guide means (33) are mounted so as to enable the runner to proceed along the closed path without being overturned.

3. Device according to claim 2, wherein the drive means comprise two closed-loop drive members (24) disposed parallel on either side of the runners (19) and wherein the guide means comprise, at said end of the closed path, a pair of pivoting wheels (33) respectively receiving the two drive members, the space located between the two wheels of the pair being free to provide a passage for the runners.

4. Device according to claim 2 or 3, further comprising at least one lever (40) oscillating in the space located between the support plate (25) of said end of the closed path so as to support the runners (19) as they proceed along the path at said end.

5. Device according to claim 4, wherein oscillation of the lever (40) is adjusted so as to raise the runners (19) in the vicinity of said end of the closed path when reversing the direction of displacement of the load (3), in order to feed them along the closed path in the reverse direction.

6. Device according to claims 4 or 5, wherein oscillation of the lever (40) is controlled by a cam mechanism (43) driven by the guide means (33, 35).

7. Device according to any one of claims 2 to 6, wherein each closed-loop drive member is a chain (24) meshing on cogs (32, 33) forming part of the guide means.

8. Device according to any one of the preceding claims, wherein each runner (19) has at least one metal reinforcement (13) to which articulation means (21) on the drive means are linked.
